(19) Europäisches Patentamt
European Patent Office
Office européen des brevets

(11) EP 4 455 225 A1

(12) **EUROPEAN PATENT APPLICATION**
published in accordance with Art. 153(4) EPC

(43) Date of publication:
**30.10.2024 Bulletin 2024/44**

(21) Application number: **22910542.4**

(22) Date of filing: **18.10.2022**

(51) International Patent Classification (IPC):
***C08L 101/02*** *(2006.01)* ***C08L 23/22*** *(2006.01)*
***C08L 83/04*** *(2006.01)* ***C08L 83/05*** *(2006.01)*
***C09K 3/10*** *(2006.01)* ***H01M 8/0284*** *(2016.01)*
***H01M 8/10*** *(2016.01)*

(52) Cooperative Patent Classification (CPC):
**C08L 23/22; C08L 83/04; C08L 101/02; C09K 3/10; H01M 8/0284; H01M 8/10;** Y02E 60/50

(86) International application number:
**PCT/JP2022/038721**

(87) International publication number:
**WO 2023/119819 (29.06.2023 Gazette 2023/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.12.2021 JP 2021206297**

(71) Applicant: **ThreeBond Co., Ltd.**
**Tokyo 192-0398 (JP)**

(72) Inventors:
- **FUKUMOTO Masayuki**
  **Hachioji-shi, Tokyo 192-0398 (JP)**
- **TANAKA Masayuki**
  **Hachioji-shi, Tokyo 192-0398 (JP)**

(74) Representative: **Hasegawa, Kan**
**Patentanwaltskanzlei Hasegawa**
**Untere Hauptstraße 56**
**85354 Freising (DE)**

(54) **CURABLE RESIN COMPOSITION**

(57) The present invention is to provide a curable resin composition comprising Components (A) to (D), wherein Component (A) is a vinyl polymer having one or more alkenyl groups per molecule; wherein Component (B) is a compound having one or more hydrosilyl groups per molecule; wherein Component (C) is a catalyst; and wherein Component (D) is a silicone rubber powder surface-coated with a silicone resin.

FIG.1

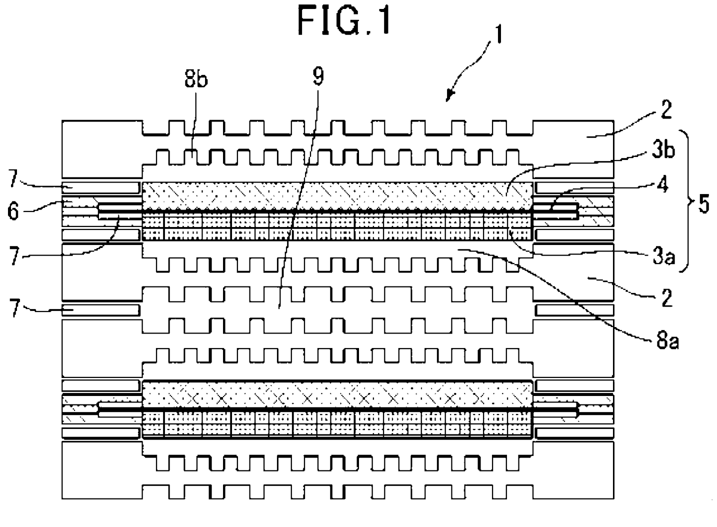


EP 4 455 225 A1

## Description

### Technical Field

A curable resin composition according to the present invention has a low viscosity and a cured product thereof is suitable for fuel cells because it has a low compression set and also has durability such as heat resistance, acid resistance, high temperature high humidity endurance, and refrigerant resistance.

### Background Art

In recent years, fuel cells have been attracting attention as new energy systems for automobiles and homes. The fuel cells are power generators that take out electric power by causing a chemical reaction between hydrogen and oxygen. In addition, the fuel cells are clean next-generation power generators because they have a high energy efficiency in power generation and produce water as a result of the reaction between hydrogen and oxygen. There are four types of fuel cells: polymer electrolyte fuel cells, phosphoric acid fuel cells, molten carbonate fuel cells, and solid oxide fuel cells. Among them, the polymer electrolyte fuel cells have a high power generation efficiency despite a relatively low operating temperature (around 80°C), and therefore are expected for usages such as power sources for automobiles, home power generators, small power supplies for electronic devices such as mobile phones, and emergency power supplies.

As illustrated in Fig. 1, a structure of a cell 1 in a polymer electrolyte fuel cell includes an electrolyte membrane electrode assembly 5, a frame 6 which supports the electrolyte membrane electrode assembly 5, and separators 2 in which gas flow channels are formed. The electrolyte membrane electrode assembly 5 has a structure in which a polymer electrolyte membrane 4 is held between an air electrode 3a and a fuel electrode 3b (hereinafter, an electrolyte membrane electrode assembly will be simply referred to as an MEA).

In order to start up the polymer electrolyte fuel cell, it is necessary to separately supply a fuel gas containing hydrogen to an anode electrode and an oxidizing gas containing oxygen to a cathode electrode in an isolated manner. This is because a mixture of one of the gases into the other gas due to insufficient isolation raises a risk of decreasing a power generation efficiency. Against this background, sealants are in heavy usage to prevent leakages of the fuel gas, the oxygen gas, and so on. Specifically, a sealant is used between the adjacent separators, between the separator and the frame, between the frame and the electrolyte membrane or MEA, or the like.

Patent Literature 1 describes, as a sealant for use in a polymer electrolyte fuel cell, a thermosetting resin composition that undergoes an addition reaction and that is made by using a polyisobutylene-based polymer which is a rubber elastic body excellent in hydrogen gas barrier properties, low moisture permeability, heat resistance, acid resistance, and flexibility. Meanwhile, in recent years, there has been a demand for a sealant usable for screen printing for the purpose of further reducing a tact time for sealant application and curing steps at a manufacturing site as in Patent Literature 2.

Patent Literature 3 discloses a curable resin composition for a formed-in-place gasket, the composition being excellent in oil resistance, heat resistance, compression set, and so on and containing a vinyl-based polymer having, per molecule, at least one alkenyl group capable of addition reaction, a hydrosilyl group-containing compound, and a silicone powder. Moreover, Patent Literature 4 discloses a curable resin composition for semiconductor devices, the composition containing an organic compound having, per molecule, at least two carbon-carbon double bonds reactive with hydrosilyl groups, a compound having at least two SiH groups per molecule, an addition catalyst, and a silicone resin-coated silicone rubber powder.

### Citation List

#### Patent Literatures

Patent Literature 1: Japanese Patent Application Publication No. 2004-111146

Patent Literature 2: Japanese Patent Application Publication No. 2009-117314

Patent Literature 3: International Publication No. WO2005/095520

Patent Literature 4: Japanese Patent Application Publication No. 2006-213899

Summary of Invention

Problems to be solved by the invention

However, in the related art, it has been difficult to provide a curable resin composition which is usable for screen printing and which can produce a cured product having both of a low compression set and durability such as heat resistance, acid resistance, high temperature high humidity endurance, and refrigerant resistance.
The present invention was made in view of the above circumstances, and the invention related to a curable resin composition was found, the curable resin composition having an appropriate viscosity, for example, a viscosity that is low but is usable for application by screen printing, a cured product of the curable resin composition having a low compression set and durability such as heat resistance, acid resistance, high temperature high humidity endurance, and refrigerant resistance.

Means for solution of the problems

The invention will be summarized below. A first embodiment of the present invention is a curable resin composition comprising Components (A) to (D) specified below:

Component (A): a vinyl polymer having one or more alkenyl groups per molecule;
Component (B): a compound having one or more hydrosilyl groups per molecule;
Component (C): a catalyst; and
Component (D): a silicone rubber powder surface-coated with a silicone resin.

A second embodiment of the present invention is the curable resin composition according to the first embodiment, wherein the Component (D) has a 50% average particle diameter of 0.5 to 10 μm.
A third embodiment of the present invention is the curable resin composition according to the first or second embodiment, wherein the Component (A) is polyisobutylene having two or more alkenyl groups per molecule.
A fourth embodiment of the present invention is the curable resin composition according to any one of the first to third embodiments, wherein the composition contains 10 to 90 parts by mass of the Component (D) per 100 parts by mass of the Component (A).
A fifth embodiment of the present invention is the curable resin composition according to any one of the first to fourth embodiments, wherein the Component (B) is polyorganohydrogensiloxane.
A sixth embodiment of the present invention is the curable resin composition according to any one of the first to fifth embodiments, wherein the Component (C) is selected from chloroplatinic acid, platinum-olefin complex, platinum-vinylsiloxane complex, $RhCl(PPh_3)_3$, $RhCl_3$, $RuCl_3$, $IrCl_3$, $FeCl_3$, $AlCl_3$, $PdCl_2 \cdot 2H_2O$, NiCh, and $TiCl_4$.
A seventh embodiment of the present invention is the curable resin composition according to any one of the first to sixth embodiments, wherein each powder particle of the Component (D) is spherical.
An eighth embodiment of the present invention is the curable resin composition according to any one of the first to seventh embodiments, further comprising a diluent as the Component (E), wherein the Component (E) is a plasticizer as Component (E1) and/or a monomer having an alkenyl group as Component (E2).
A ninth embodiment of the present invention is a thermosetting sealant comprising the curable resin composition according to any one of the first to eighth embodiments.
A tenth embodiment of the present invention is a sealant for fuel cells, comprising the curable resin composition according to any one of the first to eighth embodiments.
An eleventh embodiment of the present invention is a sealant for fuel cells according to the tenth embodiment, which is used to seal at least one member in the group consisting of a separator, a frame, an electrolyte, a fuel electrode, an air electrode, and an electrolyte membrane electrode assembly, which are members constituting a fuel cell, and another one of the members constituting the fuel cell.
A twelfth embodiment of the present invention is the sealant for fuel cells according to the eleventh embodiment, which is used in the fuel cell to seal the members of at least one pair in the group consisting of the adjacent separators, the adjacent frame and electrolyte membrane, and the adjacent frame and electrolyte membrane electrode assembly.
A thirteenth embodiment of the present invention is a method for sealing at least two members in the group consisting of a separator, a frame, an electrolyte, a fuel electrode, an air electrode, and an electrolyte membrane electrode assembly, which are members constituting a fuel cell, the method comprising performing Steps 1 to 3 described below in this order:

Step 1: a step of applying the curable resin composition according to any one of the first to eighth embodiments to a seal surface of one of the members;

Step 2: a step of bonding the seal surface of the member in Step 1 to a seal surface of the other member; and
Step 3: a step of curing the curable resin composition by heating the curable resin composition.

A fourteenth embodiment of the present invention is a method for sealing at least two members in the group consisting of a separator, a frame, an electrolyte, a fuel electrode, an air electrode, and an electrolyte membrane electrode assembly, which are members constituting a fuel cell, the method comprising performing Steps 1 to 3 described below in this order:

Step 1: a step of applying the curable resin composition according to any one of the first to eighth embodiments to a seal surface of one of the members;
Step 2: a step of curing the curable resin composition by heating the curable resin composition; and
Step 3: a step of pressing and fixing the seal surface of the member in Step 2 to a seal surface of the other member.

A fifteenth embodiment of the present invention is the seal method according to the thirteenth or fourteenth embodiment, wherein the applying step in Step 1 is performed by screen printing.

Advantageous Effects of Invention

A curable resin composition of the present invention has an appropriate viscosity, for example, a viscosity that is low but is usable for application by screen printing, and a cured product thereof has a low compression set and durability including heat resistance, acid resistance, high temperature high humidity endurance, and refrigerant resistance. Brief Description of Drawings

Fig. 1 is a schematic cross-sectional view of a single fuel cell.
Fig. 2 is a schematic diagram illustrating the entire fuel cell.

Description of Embodiments

Hereinafter, the present invention will be described in detail. In the present specification, "X to Y" is used to mean a range including the former and latter numeric values written therein (X and Y) as a lower limit value and an upper limit value, and means "X or more and Y or less". The following preferable embodiments and more preferable embodiments may be used in any appropriate combination irrespective of their expressions such as "preferable" and "more preferable". Moreover, the numeric value ranges are just examples, and a range expressed by any combination of the upper limits and the lower limits of the respective ranges and numeric values in Examples may be used as appropriate. Furthermore, a term such as "contain" or "include" may be read as "consist essentially of" or "consist only of'.

<Component (A)>

Component (A) used in the present invention is a vinyl polymer having one or more alkenyl groups per molecule. Component (A) is preferably a vinyl polymer having one or more alkenyl groups at an end of its main chain. The viscosity at 25°C of Component (A) of the present invention is not particularly limited, but may be preferably 10 to 5000 Pa·s, more preferably 300 to 4500 Pa·s, and particularly preferably 500 to 4000 Pa·s from the viewpoint of workability or the like. The viscosity in the present specification was measured by a cone-plate type viscometer, unless otherwise specified. When the alkenyl group is located at the end of the main chain of the vinyl polymer, it becomes easier to obtain a rubber elastic body having a low hardness while having a high strength and a low compression set. A specific example of the alkenyl group is, for example, an allyl group ($CH_2$=CH-$CH_2$-) or the like.

The molecular weight of Component (A) in the present invention is not particularly limited, but the number average molecular weight thereof is preferably 500 to 500,000, more preferably 1,000 to 100,000, and particularly preferably 3,000 to 50,000 because the curable resin composition in the above case can be applied by screen printing and has excellent durability. Unless otherwise specified, the number average molecular weight in this specification was calculated by a calculation method in terms of standard polystyrene using size exclusion chromatography (SEC).

Examples of the vinyl polymer of Component (A) include polyisobutylene, polyisoprene, styrene, (meth)acrylic acid, (meth)acrylic acid ester, (meth)acrylamide, acrylonitrile, vinyl acetate, polymers fabricated by mainly polymerizing monomers selected from the group consisting of fluorine-containing vinyl-based monomers and silicon-containing vinyl-based monomers, and the like. Among these, polyisobutylene and polyisoprene are preferable from the viewpoint of durability, and polyisobutylene is particularly preferable from the viewpoint of excellent hydrogen gas barrier properties. In sum, as Component (A), polyisobutylene having one or more alkenyl groups per molecule is most preferable.

The polyisobutylene as Component (A) only has to contain, for example, a - $[CH_2C(CH_3)_2]$- unit, and may be

polyisobutylene containing another constitutional unit in addition to the $-[CH_2C(CH_3)_2]-$ unit. The content of the $-[CH_2C(CH_3)_2]-$ units in the polyisobutylene as Component (A) is preferably at least 50% by mass or more, and more preferably 70% by mass or more. In the present invention, a polymer refers to a compound having a structure with monomer repeating units in the main chain of the polymer, and consisting of 100 or more repeating units.

Examples of commercially available products of the polyisobutylene as Component (A) include, but are not particularly limited to, EPION (registered trademark) 200A, 400A, 450A, and 600A (manufactured by KANEKA CORPORATION), and so forth.

<Component (B)>

Component (B) used in the present invention is a compound having two or more hydrosilyl groups (Si-H) per molecule. Specifically, Component (B) is polyorganohydrogensiloxane or the like, and is a silicone containing hydrosilyl groups in a molecule composed of a linear, branched, cyclic, or network molecule, or the like. From the viewpoint that it becomes easier to obtain a rubber elastic body having a low compression set, the SiH value of Component (B) in total is preferably 0.1 to 10 mol/kg, more preferably 1 to 8 mol/kg, and particularly preferably 3 to 5 mol/kg. Here, the SiH value mans the content of SiH groups obtained with a 400 MHz $^1H$-NMR manufactured by BRUKAER Corporation by using 1,2-dibromomethane as an internal standard.

Examples of commercially available products of Component (B) include, but are not particularly limited to, EPION (registered trademark) CR300 and CR500 (manufactured by KANEKA CORPORATION), HMS-013, HMS-151, and HMS-301 (manufactured by AZmax Co., Ltd.), SH 1107 Fluid (manufactured by Toray and Dow Coming Corporation), and so forth.

The amount of hydrosilyl groups in Component (B) per 1 mol of alkenyl groups contained in Component (A) is adequately 0.7 to 2.2 equivalents and preferably 1.2 to 2.0 equivalents. When the amount of Component (B) added is more than 0.7 equivalents, the curable resin composition tends to achieve an increased crosslinking density and therefore improve the hydrogen gas barrier properties of a cured product. Meanwhile, when the amount of Component (B) added is less than 2.2 equivalents, the curable resin composition tends to prevent a problem of foaming of a cured product due to generation of hydrogen gas with a dehydrogenation reaction. The curable resin composition preferably contains 5 to 20 parts by mass of Component (B) per 100 parts by mass of Component (A).

<Component (C)>

Component (C) used in the present invention is a catalyst. Component (C) is preferably a catalyst capable of causing an addition reaction between the alkenyl groups of Component (A) and the hydrosilyl groups of Component (B), and is desirably capable of imparting thermosetting properties to the curable resin composition. In the case of curing the curable resin composition by heating, preferred compounds as Component (C) include: chloroplatinic acid, simple platinum, solid platinum supported on a carrier such as alumina, silica or carbon black; complexes of chloroplatinic acid with alcohols, aldehydes, ketones, and the like; platinum-olefin complexes such as $Pt(CH_2=CH_2)_2Cl_2$; platinum-vinylsiloxane complexes such as a platinum divinyltetramethyldisiloxane complexes $O[Si(CH_3)_2CH=CH_2]_2Pt$, $Pt_n(ViMe_2SiOSiMe_2Vi)_x$ and $Pt[(MeViSiO)_4]_y$; and platinum-phosphite complexes such as $Pt(PPh_3)_4$ and $Pt(PBu_3)_4$. Among these, chloroplatinic acid, platinum-olefin complexes, platinum-vinylsiloxane complexes and the like are preferable from the viewpoint of excellent activity. Here, Vi refers to a vinyl group. Examples of the catalyst as Component (C) other than platinum compounds include $RhCl(PPh_3)_3$, $RhCl_3$, $RuCl_3$, $IrCl_3$, $FeCl_3$, $AlCl_3$, $PdCl_2 \cdot 2H_2O$, $NiCl_2$, $TiCl_4$, and the like. These catalysts may be used singly or in combination of two or more. In order to prevent a rapid reaction when mixing Component (C) to a composition containing Components (A) and (B), Component (C) is preferably added in a state diluted with a solvent.

The amount of Component (C) blended is not particularly limited. However, the amount of Component (C) used per 100 parts by mass of Component (A) may be in the range of 0.001 to 1.0 parts by mass, and preferably in the range of 0.001 to 0.5 parts by mass.

It is preferable to use a reaction inhibitor together with Component (C). Examples of the reaction inhibitor include compounds containing aliphatic unsaturated bonds, organic phosphorus compounds, organic sulfur compounds, nitrogen-containing compounds, and the like. These may be used singly or in combination of two or more.

Specific examples of the compounds containing aliphatic unsaturated bonds include: propargyl alcohols such as 3-hydroxy-3-methyl-1-butyne, 3-hydroxy-3-phenyl-1-butyne, 3,5-dimethyl-1-hexyn-3-ol, and 1-ethynyl-1-cyclohexanol; en-yne compounds; maleic acid esters such as maleic anhydride and dimethyl maleate; and the like. Specific examples of the organic phosphorus compounds include triorganophosphines, diorganophosphines, organophosphones, triorganophosphites, and the like. Specific examples of the organic sulfur compounds include organomercaptans, diorganosulfides, hydrogen sulfide, benzothiazole, thiazole, benzothiazole disulfide, and the like. Specific examples of the nitrogen-containing compounds include N,N,N',N'-tetramethylethylenediamine, N,N-dimethylethylenediamine, N,N-diethylethylenediamine, N,N-dibutylethylenediamine, N,N-dibutyl-1,3-propanediamine, N,N-dimethyl-1,3-propanediamine, N,N,N' ,N' -tetraethylethylenediamine, N,N-dibutyl-1,4-butanediamine, 2,2 '-bipyridine, and the like.

The amount of the reaction inhibitor added per 100 parts by mass of Component (A) is preferably 0.01 to 5.0 parts by mass, more preferably 0.5 to 3.0 parts by mass, and most preferably 0.8 to 2.0 parts by mass. Component (C) and the reaction inhibitor are preferably added at a mass ratio of 1:10 to 1:1000.

<Component (D)>

Component (D) used in the present invention is a silicone rubber powder surface-coated with a silicone resin. The silicone rubber powder refers to a fine powder of a silicone rubber having a linear polydimethylsiloxane structure. The silicone resin is a polymer or oligomer in which a siloxane bond is $(RSiO_{3/2})_n$, where R denotes an organic group and n denotes an integer of 3 or more. The silicone resin is not particular limited in terms of molecular weight and modified organic groups, but preferably has a crosslinked structure in the form of a three-dimensional network. A specific preferred example of Component (D) is a core-shell powder containing a silicone rubber as a core and a silicone resin as a shell. From the viewpoint that a low viscosity can be achieved in the present invention, it is particularly preferable that each powder particle of Component (D) be spherical and it is most preferable that the curable resin composition should not contain any organic filler other than Component (D). Component (D) may be used singly or two or more Components (D) may be mixed.

The 50% average particle diameter of Component (D) is not particularly limited, but is preferably 0.1 μm or more, and more preferably 0.5 μm or more. When the 50% average particle diameter is 0.1 μm or more, the viscosity of the curable resin composition can be made low. Meanwhile, the 50% average particle diameter of Component (D) is preferably 20 μm or less, more preferably 15 μm or less, and further preferably 10 μm or less. When the 50% average particle diameter of Component (D) is 15 μm or less, a cured product has a low compression set and is excellent as a cured product. Here, unless otherwise specified, the 50% average particle diameter (median particle diameter) in the present specification refers to a value of a particle diameter at 50% of the cumulative volume determined by measuring a particle size distribution with a laser diffraction particle size distribution analyzer. In the case where two or more Components (D) are mixed, the 50% average particle diameter is a 50% average particle diameter of the mixed powers.

Specific examples of Component (D) include, but are not limited to, KMP series KMP-601, KMP-600, KMP-605, X-52-7030 (manufactured by Shin-Etsu Chemical Co., Ltd.) and the like.

From the viewpoint that the low compression set and the excellent durability can be achieved, the content of Component (D) per 100 parts by mass of Component (A) is preferably 10 to 90 parts by mass, more preferably 15 to 80 parts by mass, and further preferably 20 to 70 parts by mass.

<Component (E)>

In the present invention, a diluent may be added as Component (E). The curable resin composition may be blended with a diluent in order to obtain a viscosity usable for screen printing, but a type of diluent is not particularly limited as long as the diluent can adjust the viscosity of the curable resin composition. Specifically, as Component (E), Component (E1) and/or Component (E2) can be used. Component (E1) is a plasticizer, whereas Component (E2) is a monomer having an alkenyl group. The amount of Component (E) per 100 parts by mass of Component (A) is preferably 0.05 to 100 parts by mass and more preferably 0.5 to 80 parts by mass. Component (E) may be used singly, or two or more Components (E) may be used in combination.

Plasticizers usable as Component (E1) include, but are not limited to, phthalate-based plasticizers, adipate ester-based plasticizers, trimellitic acid ester-based plasticizers, polyester-based plasticizers, epoxidized vegetable oil-based plasticizers, polyalolefin-based plasticizers, and so on. As Component (E1), a polyalphaolefin-based plasticizer is preferable from the viewpoint that the compression set of a cured product in the present invention can be made low. The polyalphaolefin-based plasticizer is known to be produced through a polymerization reaction and hydrogenation processing using, for example, ethylene-derived α-olefin as a raw material. In addition, it is appropriate that Component (E1) does not contain unsaturated double bonds and impurities such as sulfur atoms and nitrogen atoms from the viewpoint that the compression set of a cured product can be made low. Specific examples of the polyalphaolefin-based plasticizer include, but are not limited to, "SpectraSyn series" (manufactured by Exxon Mobil Corporation).

Monomers each having an alkenyl group usable as Component (E2) include compounds each having a vinyl group or an allyl group. Specific examples of Component (E2) include, but are not limited to, 2,4,6-tris(allyloxy)-1,3,5-triazine, 1,2-polybutadiene, 1,2-polybutadiene derivatives, trimethylolpropane diallyl ether, pentaerythritol triallyl ether, triallyl phosphate ester, triallyl isocyanurate, diallyl isocyanurate, diallyl monoglycidyl isocyanurate, diallyl monobenzyl isocyanurate, diallyl monopropyl isocyanurate, diallyl phthalate, triallyl trimellitate, diethylene glycol bisallyl carbonate, trimethylolpropane diallyl ether, trimethylolpropane triallyl ether, pentaerythritol triallyl ether, pentaerythritol tetraallyl ether, 1,1,2,2-tetraallyloxyethane, diarylidene pentaerythritol, triallyl cyanurate, 1,2,4-trivinylcyclohexane, 1,4-butanediol

diallyl ether, nonanediol diallyl ether, 1,4-cyclohexanedimethanol diallyl ether, triethylene glycol diallyl ether, trimethylolpropane trivinyl ether, pentaerythritol tetravinyl ether, diallyl ether of bisphenol S, cyclohexane diallyl ether methanol divinyl ether, divinylbenzene, divinylbiphenyl, 1,3-diisopropenylbenzene, 1,4-diisopropenylbenzene, 1,3-bis(allyloxy)adamantane, 1,3-bis(vinyloxy)adamantane, 1, 3,5-tris(allyloxy)adamantane, 1,3,5-tris(vinyloxy)adamantane, dicyclopentadiene, vinylcyclohexene, 1,5-hexadiene, 1,9-decadiene, diallyl ether, diallyl ether of bisphenol A, 2,5-diallylphenol allyl ether, their oligomers, allyl ethers of novolac phenols, and so on.

<Optional Components>

Additives such as an adhesion-imparting agent, a filler, a storage stabilizer, an antioxidant, a light stabilizer, a heavy metal deactivator, a pigment, a flame retardant, a polymerization inhibitor, and a surfactant may be used in the composition of the present invention as long as the object of the present invention will not be hindered.

In the present invention, for the purpose of improving the elastic modulus, fluidity, and so on of a cured product, a filler may be added to an extent that the filler will not impair the storage stability. Specific examples of the filler include organic powders and inorganic powders. As the inorganic powder filler, there are metal powder, glass, fumed silica, alumina, mica, ceramics, calcium carbonate, aluminum nitride, carbon powder, kaolin clay, dry clay mineral, dry diatomaceous earth, and the like. The amount of the inorganic powder blended per 100 parts by mass of Component (A) is preferably about 0.1 to 100 parts by mass. When the amount of the inorganic powder blended is more than 0.1 parts by mass, the inorganic powder can exert the sufficient effect. Meanwhile, when the amount is less than 100 parts by mass, the curable resin composition can be prevented from becoming poor in fluidity and therefore decreasing in workability.

Fumed silica, in particular, may be added for the purpose of adjusting the viscosity of the curable resin composition or improving the mechanical strength of a cured product. As the fumed silica, it is preferable to use one hydrophobized with organochlorosilane, polyorganosiloxane, hexamethyldisilazane, or the like. Specific examples of the fumed silica include, but are not limited to, AEROSIL series R974, R972, R972V, R972CF, R805, R812, R812S, R816, R8200, RY200, RX200, RY200S, and R202 manufactured by NIPPON AEROSIL CO., LTD, and so on.

Examples of the organic powder filler include polyethylene, polypropylene, nylon, cross-linked acryl, cross-linked polystyrene, polyester, polyvinyl alcohol, polyvinyl butyral, and polycarbonate. The amount of the organic powder blended per 100 parts by mass of Component (A) is preferably about 0.1 to 100 parts by mass. When the amount of the organic powder blended is more than 0.1 parts by mass, the organic powder can exert the sufficient effect. Meanwhile, when the amount is less than 100 parts by mass, the curable resin composition can be prevented from becoming poor in fluidity and therefore decreasing in workability.

Among the foregoing optional components, the antioxidant, the light stabilizer, and the heavy metal deactivator are preferably added for the purposes of improving the storage stability and improving the weatherability of the curable resin composition. As the antioxidant, phenol-based antioxidants, hindered phenol-based antioxidants, organic sulfur-based antioxidants, amine-based antioxidants, and benzotriazole-based antioxidant may be used. As the light stabilizer, hindered amine-based light stabilizers and benzoate-based light stabilizers may be used. Examples of the antioxidant and the light stabilizer include, but are not limited to, Sumilizer series BHT, S, BP-76, MDP-S, GM, BBM-S, WX-R, NW, BP-179, BP-101, GA-80, TNP, TPP-R, and P-16 manufactured by Sumitomo Chemical Company, Limited; ADK STAB series AO-20, AO-30, AO-40, AO-50, AO-60, AO-70, AO-80, AO-330, PEP-4C, PEP-8, PEP-24G, PEP-36, HP-10, 2112, 260, 522A, 329K, 1500, C, 135A, and 3010 manufactured by ADEKA Corporation; TINUVIN series 770, 765, 144, 622, 111, 123, and 292 manufactured by Ciba Specialty Chemicals; and the like. Examples of the heavy metal deactivator include, but are not limited to, ADK STAB series CDA-1, CDA-1M, CDA-6S, CDA-10, ZS-27, ZS-90, ZS-91 manufactured by ADEKA Corporation, and the like. The amount of the antioxidant, the light stabilizer, and the heavy metal deactivator blended per 100 parts by mass of Component (A) is preferably 0.001 to 5.0 parts by mass and more preferably 0.01 to 3.0 parts by mass.

The curable resin composition of the present invention can be produced according to a method known in the related art. For example, the curable resin composition can be produced by blending predetermined amounts of Components (A) to (E) and other optional components and mixing them by using a mixing device such as a mixer preferably at a temperature of 10 to 70°C, or more preferably at normal temperature (25°C±5°C) for preferably 0.1 to 5 hours or more preferably 1 to 2 hours.

<Application Method>

As a method for applying the curable resin composition of the present invention to an adherend, a known method for applying a resin composition may be used. Examples of the application method include methods such as dispensing using an automatic applicating machine, spraying, inkjet, screen printing, gravure printing, dipping, and spin coating. Here, from the viewpoint of the low viscosity, the curable resin composition of the present invention is preferably applied by a screen printing method.

<Curing Method>

A method for curing the curable resin composition of the present invention is not particularly limited but the curable resin composition can be cured by heating. Although not particularly limited, the curing temperature is preferably 30 to 300°C, more preferably 50 to 200°C, and further preferably 60 to 150°C. Although not particularly limited, the curing time in the above temperature range, in particular, in the case of 60 to 150°C, is preferably 20 minutes or longer and 5 hours or shorter (or shorter than 5 hours), and more preferably 40 minutes or longer and 3 hours or shorter.

When the curable resin composition of the present invention is prepared as a two-component composition, the curable resin composition can be cured at room temperature (preferably 25°C±5°C) after mixing. In the case where the composition is used as a two-component composition, it is preferable that Component (A) be contained in one liquid whereas Component (B) and/or Component (C) be contained in the other liquid. When Component (A) and Component (B) and/or Component (C) are separated in the different liquids as described above, an unnecessary reaction during storage can be avoided and the storage stability can be improved. Then, for use, the curable resin composition can be cured by mixing the two liquids or by separately applying the two liquids and bringing the applied two liquids into contact with each other.

<Usage Areas>

The curable resin composition of the present invention has a low compression set, and a cured product thereof is a rubber elastic body with excellent heat resistance, acid resistance, high temperature and high humidity endurance, and refrigerant resistance. Therefore, the curable resin composition can be used in fuel cells, solar cells, dye-sensitized solar cells, lithium-ion batteries, electrolytic capacitors, liquid crystal displays, organic EL displays, electronic paper, LEDs, hard disk devices, photodiodes, optical communications/circuits, electric wires/cables/optical fibers, optical isolators, layered products such as IC cards, sensors, substrates, pharmaceutical and medical instruments and equipment, and so forth. Among these usages such as instruments, the usage for fuel cells is particularly preferable because the curable resin composition of the present invention has both characteristics of a low viscosity and a low compression set.

<Fuel Cell>

The fuel cells are power generators that take out electric power by causing a chemical reaction between hydrogen and oxygen. There are four types of fuel cells: polymer electrolyte fuel cells, phosphoric acid fuel cells, molten carbonate fuel cells, and solid oxide fuel cells. Among them, the polymer electrolyte fuel cells have a high power generation efficiency despite a relatively low operating temperature (around 80°C), and therefore are employed for usages such as power sources for automobiles, home power generators, small power supplies for electronic devices such as mobile phones, and emergency power supplies.

As illustrated in Fig. 1, a structure of a cell 1 in a typical polymer electrolyte fuel cell includes an electrolyte membrane electrode assembly (MEA), a frame 6 which supports the MEA, and separators 2 in which gas channels are formed. The MEA has a structure in which the polymer electrolyte membrane 4 is held between a fuel electrode 3a and an air electrode 3b. To start up the polymer electrolyte fuel cell, a fuel gas (hydrogen gas) and an oxidizing gas (oxygen gas) are supplied through a fuel gas channel 8a and an oxidizing gas channel 8b. In addition, cooling water flows through a cooling water channel 9 for the purpose of alleviating heat generation during power generation. Note that a package in which several hundreds of these cells are stacked is referred to as a cell stack 10 as illustrated in Fig. 2.

When the fuel gas (hydrogen gas) is supplied to the fuel electrode and the oxidizing gas (oxygen gas) is supplied to the oxygen electrode, the gases undergo the following reactions at the respective electrodes to overall cause a reaction of producing water ($H_2 + 1/2O_2 \rightarrow H_2O$). To explain in detail, as shown below, protons ($H^+$) generated at the fuel electrode diffuse through the solid polymer membrane, move to the oxygen electrode side, and react with the oxygen to generate water, and the water ($H_2O$) thus generated is discharged from the oxygen electrode side.

Fuel electrode (anode electrode): $H_2 \rightarrow 2H^+ + 2e^-$

Oxygen electrode (cathode electrode): $1/2O_2 + 2H^+ + 2e^- \rightarrow H_2O$

To start up the polymer electrolyte fuel cell, it is necessary to separately supply the fuel gas containing hydrogen to the anode electrode and the oxidizing gas containing oxygen to the cathode electrode in an isolated manner. This is because a mixture of one of the gases into the other gas due to insufficient isolation raises a risk of decreasing a power generation efficiency. Against this background, sealants are in heavy usage to prevent leakages of the fuel gas, the oxygen gas, and so on. Specifically, the sealants are used between adjacent separators, between a separator and a frame, between a frame and an electrolyte membrane or an MEA, and the like.

As the polymer electrolyte membrane, there is a cation exchange membrane with ion conductivity, which is made of: fluoropolymer or fluorine-based polymer with a sulfonic acid group; engineering plastic such as polyetherketone, polyethersulfone, polyphenylene sulfide, polyphenylene ether, or polyparaphenylene; or hydrocarbon-based polymer in which protonic acid groups such as sulfonic acid groups, carboxylic acid groups, phosphoric acid groups, or boronic acid groups are introduced into a general-purpose plastic such as polyethylene, polypropylene, or polystyrene. Among them, the fluoropolymer, fluorine-based polymer with a sulfonic acid group, and the like are preferable because they are chemically stable and endurable in operation at high temperature. Commercially available products of the polymer electrolyte membrane include Nafion (registered trademark) manufactured by DuPont, Flemion (registered trademark) manufactured by AGC Corporation (formerly Asahi Glass Co., Ltd.), and Aciplex (registered trademark) manufactured by Asahi Kasei Corporation. The polymer electrolyte membrane is usually made of a difficult-to-bond material, but can be bonded by using the curable resin composition of the present invention.

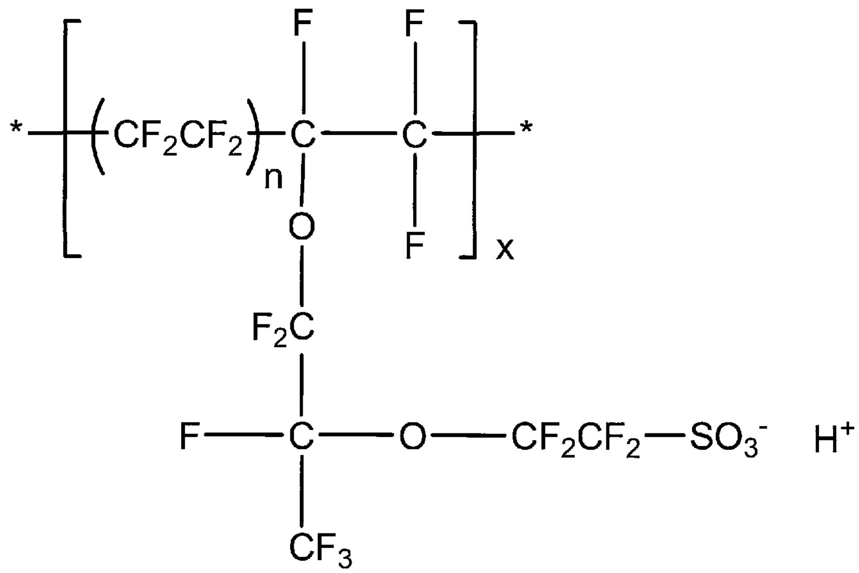

Nafion (registered trademark)

The fuel electrode is referred to as a hydrogen electrode or an anode, and a known electrode is used. For example, an electrode is used in which a carbon carries a catalyst such as platinum, nickel, or ruthenium. Meanwhile, the air electrode is referred to as an oxygen electrode or a cathode, and a known electrode is used. For example, an electrode is used in which a carbon carries a catalyst such as platinum or alloy. The surface of each of the electrodes may include a gas diffusion layer that functions to diffuse the gas or moisturize the electrolyte membrane. As the gas diffusion layer, a known layer is used, and examples thereof include carbon paper, carbon cloth, carbon fiber, and so on.

As illustrated in Fig. 1, each of the aforementioned separators 2 has a finely-corrugated channel through which the fuel gas or the oxidizing gas is supplied to the electrode. The separators are made of aluminum, stainless steel, titanium, graphite, carbon, or the like.

The aforementioned frame is for supporting and reinforcing the thin membrane of the electrolyte membrane or MEA to prevent the membrane from tearing. A material for the aforementioned frame is a thermoplastic resin such as polyvinyl chloride, polyethylene naphthalate (PEN), polyethylene terephthalate (PET), polypropylene (PP) or polycarbonate.

The fuel cell of the present invention is a fuel cell characterized in that sealing is provided by the curable resin composition of the present invention. Members to be sealed in the fuel cell include the separators, the frame, the electrolyte membrane (electrolyte), the fuel electrode, the air electrode, the MEA, and so on. The curable resin composition of the present invention is used to seal these members or seal at least one of these members and another member constituting the fuel cell. More specific portions to be sealed include the adjacent separators, the adjacent separator and frame, the adjacent frame and electrolyte membrane, the adjacent frame and MEA, and so forth. The main purpose of sealing the adjacent separator and frame, the adjacent frame and electrolyte membrane, and the adjacent frame and MEA is to prevent the gases from mixing or leaking, whereas the purpose of sealing the adjacent separators is to prevent the gas from leaking or the cooling water from leaking from the cooling water channel to the outside.

<Seal Method>

A preferable usage of the curable resin composition of the present invention is a sealant. The sealant is applied to one adherend or a gap between two or more adherends, and thus is used for a so-called seal for the purposes of preventing a leakage to keep the inside hermetically sealed and preventing a moisture from entering from the outside. Hereinafter, a pre-curing composition containing the curable resin composition for the above purposes will be referred to as a sealant, a cured product obtained by curing the curable resin composition for a sealant usage will be referred to as a seal, and a curing method will be referred to as a seal method.

The curable resin composition is preferably a liquid at 25°C for usage as a sealant. The seal methods using the curable resin composition of the present invention include, but are not particularly limited to, FIPG (formed-in-place gasket), CIPG (cured-in-place gasket), MIPG (molded-in-place gasket), and the like. Among them, the CIPG and the MIPG are preferable from the viewpoint that the characteristic of a low compression set can be obtained.

In the present invention, the FIPG refers to a method for sealing at least two members in the group consisting of the members constituting the fuel cell, specifically, the separators, the frame, the electrolyte, the fuel electrode, the air electrode, and the electrolyte membrane electrode assembly, and is a seal method including performing Steps 1 to 3 described below in this order:

Step 1: a step of applying the curable resin composition to a seal surface of one of the members;
Step 2: a step of bonding a seal surface of the other member to the surface of the member in Step 1 on which the curable resin composition is applied; and
Step 3: a step of curing the curable resin composition by heating the curable resin composition.

In the present invention, the CIPG refers to a method for sealing at least two members the group consisting of the members constituting the fuel cell, specifically, the separators, the frame, the electrolyte, the fuel electrode, the air electrode, and the electrolyte membrane electrode assembly, and is a seal method including performing Steps 1 to 3 described below in this order:

Step 1: a step of applying the curable resin composition to a seal surface of one of the members;
Step 2: a step of curing the curable resin composition by heating the curable resin composition; and
Step 3: a step of bonding a seal surface of the other member to the surface of the member in Step 2 on which the cured curable resin composition is applied.

In the present invention, the MIPG refers to a case where, in Step 1 of the FIPG or CIPG, a mold is pressed against the seal surface of the member and the composition pressure-fed into a cavity in the mold and thereby applied to the seal surface. In Step 2, the FIPG includes curing the curable resin composition after releasing the mold from the seal surface, whereas the CIPG includes curing the curable resin composition with the mold kept pressed against the seal surface. In order to make it easier to remove the seal from the mold, it is preferable to apply a fluorine-based, silicone-based, or other mold release agent to the inner surface of the mold in advance.

[Examples]

Hereinafter, the present invention will be described in further details by taking Examples, but the present invention should not be limited to these Examples. Hereinafter, the curable resin composition will be simply referred to as the composition in some cases.

The following components were used to prepare Examples 1 to 6 and Comparative Examples 1 to 4.

<Component (A)>

· Polyisobutylene having allyl groups at both ends, and having 2750 Pa-s at 25°C and a number average molecular weight of 15350 (EPION 450A manufactured by KANEKA CORPORATION)

<Component (B)>

· Compound having two or more hydrosilyl groups (EPION CR500 manufactured by KANEKA CORPORATION)

<Component (C)>

Xylene/ethylbenzene solution containing 3% by mass of a platinum divinyltetramethyldisiloxane complex (Pt-VTSC-3.0X manufactured by Umicore Precious Metals Japan Co., Ltd.)

<Component (D)>

· Spherical silicone rubber powder having a 50% average particle diameter of 12 μm and being surface-coated with silicone resin (KMP-601 manufactured by Shin-Etsu Chemical Co., Ltd.)
· Spherical silicone rubber powder having a 50% average particle diameter of 5 μm and being surface-coated with silicone resin (KMP-600 manufactured by Shin-Etsu Chemical Co., Ltd.)
·Spherical silicone rubber powder having a 50% average particle diameter of 2 μm and being surface-coated with silicone resin (KMP-605 manufactured by Shin-Etsu Chemical Co., Ltd.)
·Spherical silicone rubber powder having a 50% average particle diameter of 0.8 μm and being surface-coated with silicone resin (X-52-7030 manufactured by Shin-Etsu Chemical Co., Ltd.)

<Comparative Component (Component (D')) for Component (D)>

· Spherical silicone rubber powder having a 50% average particle diameter of 13 μm (powder consisting only of a silicone rubber) (KMP-598 manufactured by Shin-Etsu Chemical Co., Ltd.)
·Spherical silicone rubber powder having a 50% average particle diameter of 5 μm (powder consisting only of a silicone rubber) (KMP-597 manufactured by Shin-Etsu Chemical Co., Ltd.)
· Spherical silicone rubber powder having a 50% average particle diameter of 2 μm (powder consisting only of a silicone rubber) (KMP-706 manufactured by Shin-Etsu Chemical Co., Ltd.)
· Spherical urethane beads having a 50% average particle diameter of 17 μm (C-450SI manufactured by Negami Chemical Industrial Co., Ltd.)

<Component (El)>

· Polyalphaolefin-based plasticizer (SpectraSyn4 manufactured by Exxon Mobil Corporation)

<Component (E2)>

·Cyclohexanedimethanol divinylether (CHDEV manufactured by NIPPON CARBIDE INDUSTRIES CO., INC.)

<Other Components>

Antioxidant

· Hindered phenol-based antioxidant (ADEKA STAB AO-50 manufactured by ADEKA Corporation)

Light stabilizer

·Hindered amine-based light stabilizer (TINUVIN 765 manufactured by Ciba Specialty Chemicals)

Heavy metal deactivator

·Complex heavy metal deactivator (ADEKA STAB ZS-27 manufactured by ADEKA Corporation)

Reaction inhibitor

· Dimethyl Maleate (Reagent)

The above components were taken in the amounts of parts by mass specified in Table 1. The components other than Component (C) were weighed into a stirring pot of a planetary mixer and stirred at normal temperature (25°C) for 60 minutes. Then, Component (C) was added to the resultant mixture, followed by further stirring at normal temperature (25°C) for 30 minutes to prepare the composition. The detailed amounts for the preparation are specified in Table 1 and the numeric values are expressed in parts by mass. A compression set test was conducted on Examples 1 to 5 and Comparative Examples 1 to 3.

<Compression Set Test>

The composition was applied in a bead width of 2 mm, a bead thickness of 1 mm, and a length of 50 mm to a steel base with a length of 80 mm, a width of 50 mm, and a thickness of 5 mm. Then, in a hot air drying oven, the composition was left in a 130°C atmosphere for 5 minutes to be cured. After the cured composition was taken out and returned to room temperature (25°C±5°C) once, the composition was after-baked for 1 hour in a 130°C atmosphere to produce a cured product. The cured product on another base was left at a compression rate of 25% in a 90°C atmosphere and then taken out therefrom after 96 hours. As "Compression Set 1 (%)", a compression set was calculated from the bead height of the cured product after the cured product was returned to the room temperature (25°C±5°C). Another cured product on another base was left at a compression rate of 25% in a 120°C atmosphere and then taken out therefrom after 96 hours. As "Compression Set 2 (%)", a compression set was calculated from the bead thickness of the cured product after the cured product was returned to the room temperature. Here, both Compression Set 1 and Compression Set 2 are preferably 28% or less and more preferably 27% or less. The calculation was made in accordance with the following formulae and the test method was in conformity with JIS K 6262 (2013).

[Formulae 1]

$$\text{Compression Set (\%)} = \frac{\text{Bead Thickness (mm)} - \text{Bead Thickness After Compression (mm)}}{\text{Bead Thickness (mm)} - \text{Clearance During Compression (mm)}} \times 100$$

$$\text{Compression Rate (\%)} = \frac{\text{Bead Thickness (mm)} - \text{Clearance During Compression (mm)}}{\text{Bead Thickness (mm)}} \times 100$$

[Table 1]

| Component | Raw Material | Ex. 1 | Ex. 2 | Ex. 3 | Ex. 4 | Ex. 5 | Comp. Ex. 1 | Comp. Ex. 2 | Comp. Ex. 3 |
|---|---|---|---|---|---|---|---|---|---|
| Component (A) | EPION 450A | 100 | 100 | 100 | 100 | 100 | 100 | 100 | 100 |
| Component (B) | CR-500 | 9 | 9 | 9 | 9 | 9 | 9 | 9 | 9 |
| Component (C) | Pt-VTSC-3.0X | 0.1 | 0.1 | 0.1 | 0.1 | 0.1 | 0.1 | 0.1 | 0.1 |
| Component (D) | KMP-601 | 52 | | | | | | | |
| | KMP-600 | | 52 | | | 26 | | | |
| | KMP-605 | | | 52 | | 26 | | | |
| | X-52-7030 | | | | 52 | | | | |
| Component (D') | KMP-598 | | | | | | 52 | | |
| | KMP-597 | | | | | | | 52 | |
| | KMP-706 | | | | | | | | 52 |
| Component (E) | SpectraSyn4 | 31 | 31 | 31 | 31 | 31 | 31 | 31 | 31 |
| Other Component | Dimethyl Maleate | 0.3 | 0.3 | 0.3 | 0.3 | 0.3 | 0.3 | 0.3 | 0.4 |
| Total | | 192.13 | 192.13 | 192.13 | 192.13 | 192.13 | 192.13 | 192.13 | 192.28 |
| Compression Set 1 | | 26 | 23 | 15 | 16 | 18 | 29 | 31 | 31 |
| Compression Set 2 | | 27 | 23 | 15 | 16 | 19 | 30 | 35 | 29 |

Examples 1 to 5 all had excellent results in compression set, whereas Comparative Examples 1 to 3 using Components (D') instead of Component (D) of the present invention had poor results in compression set.

Example 6 and Comparative Example 4 were prepared in the same manner as in Examples 1 to 5 and Comparative Examples 1 to 3. The detailed amounts for the preparation are specified in Table 2 and the numeric values are expressed in parts by mass. A viscosity measurement and durability tests were conducted on Example 6 and Comparative Example 4. The types of the durability tests are of heat resistance, acid resistance, high temperature and high humidity endurance, and refrigerant resistance, and test items in the durability tests are hardness, elongation, and tensile strength, which are each expressed as a rate of change from its initial value.

[Table 2]

| Component | Raw Material | Ex. 6 | Comp. Ex. 4 |
|---|---|---|---|
| Component (A) | EPION 450A | 100 | 100 |
| Component (B) | CR-500 | 11 | 8 |
| Component (C) | Pt-VTSC-3.0X | 0.1 | 0.1 |
| Component (D) | KMP-605 | 26 | |
| Component (D') | C-450SI | | 26 |
| Component (E) | SpectraSyn4 | 47 | 47 |
| | CHDEV | 1 | |
| Other Components | AO-50 | 1.0 | 1.0 |
| | TINUVIN 765 | 1.0 | 1.0 |
| | ZS-27 | 0.5 | 0.5 |
| | Dimethyl Maleate | 0.3 | 0.3 |
| Total | | 187.6 | 183.7 |

<Viscosity Measurement>

The "viscosity (Pa s)" of the composition at 25°C was measured with a (HAAKE MARS III) under the following measurement conditions. The viscosity is preferably 50 to 150 Pa-s or less and more preferably 70 to 130 Pa·s or less.
Measurement conditions

| | |
|---|---|
| Preshear condition | 20 (1/s) 30 sec |
| Geometry | C20/1 |
| Shear rate | 0.01 to 100 1/s (the value was read at 1.0 1/s) |
| Temperature | 25±2°C |

<Screen Printability Check Test>

The composition was applied to a 20 μm-thick polyester 70 mesh and printed onto a PET film under the mesh. After that, the mesh was manually peeled off from the PET film, and after the passage of 10 seconds, the state of the printed layer was visually checked according to the following evaluation criteria.

Evaluation criteria:

◦: Good with no air bubbles observed
×: Poor with air bubbles remaining

<Hardness Measurement>

A polytetrafluoroethylene frame having a thickness of 1 mm, a length of 10 mm, and a length of 10 mm was

placed on a polytetrafluoroethylene plate and the composition was applied thereto. The composition was cured in a sheet form by heating the polytetrafluoroethylene plate in a hot air drying oven in a 130°C atmosphere for 1 hour. A test piece was prepared by stacking 6 cured product sheets. While a pressing surface of an A-type durometer (hardness tester) was kept parallel to the test piece, the pressing surface was pressed with a force of 10 N and brought into close contact with the sample. The maximum value was read during the measurement, and the maximum value was determined as "hardness". The details of the measurement were in accordance with JIS K 6253 (2012). The hardness is preferably 13 or more and more preferably 16 or more.

<Elongation Measurement>

A polytetrafluoroethylene frame having a thickness of 1 mm, a length of 10 mm, and a length of 10 mm was placed on a polytetrafluoroethylene plate and the composition was applied thereto. The composition was cured in a sheet form by heating the polytetrafluoroethylene plate in a hot air drying oven in a 130°C atmosphere for 1 hour. A test piece was prepared by punching out the cured product with a cutter for a No. 3 dumbbell, and gauge lines at a distance of 20 mm were marked on the test piece. Both ends of the test piece were fixed to chucks so that the long axis of the test piece was aligned with the centers of the chucks. Since pulling a test piece at a tensile speed of 500 mm/min causes the test piece to elongate and the distance between the gauge lines to increase, the distance between the gauge lines was measured with a vernier caliper until the test piece brock. The rate of elongation was defined as an "elongation (%)" based on the initial distance between the gauge lines. Here, the elongation is preferably 130% or more and more preferably 200% or more from the viewpoint of high extensibility. The elongation of Example 6 was 265% and the elongation of Comparative Example 4 was 305%.

<Tensile Strength Measurement>

A polytetrafluoroethylene frame having a thickness of 1 mm, a length of 10 mm, and a length of 10 mm was placed on a polytetrafluoroethylene plate and the composition was applied thereto. The composition was cured in a sheet form by heating the polytetrafluoroethylene plate in a hot air drying oven in a 130°C atmosphere for 1 hour. A test piece was prepared by punching out the cured product with a cutter for a No. 3 dumbbell. Both ends of the test piece were fixed to chucks so that the long axis of the test piece was aligned with the centers of the chucks. The test piece was pulled at a tensile speed of 50 mm/min until the test piece brock, the maximum load was measured, and a "tensile strength (MPa)" was calculated from the cross-sectional area. The details of the measurement were in accordance with JIS K 6251 (2010). Here, the tensile strength is preferably 0.5 MPa or more and more preferably 0.9 MPa or more. The tensile strength of Example 6 was 0.9 MPa and the tensile strength of Comparative Example 4 was 0.8 MPa.

<Durability Tests>

After the hardness measurement, the elongation measurement, and the tensile strength measurement were performed, other test pieces were left under specific conditions for the four types of durability tests to be described below, and then were taken out and returned to the room temperature. After that, each of the measurements was performed to check a "hardness change rate (%)", an "elongation change rate (%)", and a "tensile strength change rate (%)" as compared with the initial values. The hardness change rate is preferably 0 to 15%, the elongation change rate is preferably -10 to 10%, and the tensile strength change rate is preferably 0 to 10%.

· Heat resistance: Left for 500 hours in a 120°C atmosphere in a hot air drying oven

· Acid resistance: Left for 500 hours in a 90°C atmosphere in a pressure resistant container where 5 ppm of hydrofluoric acid was added to a pH 4 sulfuric acid aqueous solution

· High temperature high humidity endurance: Left for 500 hours in an atmosphere at 85°C and 85%RH in a thermostatic chamber

· Refrigerant resistance: Left for 500 hours in a 90°C atmosphere in a pressure resistant container where a solution of ethylene glycol and water mixed at a mass ratio of 1: 1 was placed

[Table 3]

| Test Item | Example 6 | Comparative Exa mple 4 |
|---|---|---|
| Viscosity (25°C) | 93 | 60 |
| Screen Printability | ○ | ○ |

(continued)

| Test Item | | | Example 6 | Comparative Exa mple 4 |
|---|---|---|---|---|
| Initial Value | | Hardness | 17 | 15 |
| | | Elongation (%) | 265 | 305 |
| | | Tensile Strength (MPa) | 0.9 | 0.8 |
| Durability Test | Heat Resistance | Hardness Change Rate (%) | 13 | 19 |
| | | Elongation Change Rate (%) | 2 | -15 |
| | | Tensile Strength Change Rate (%) | 10 | 0 |
| | Acid Resistance | Hardness Change Rate (%) | 0 | -6 |
| | | Elongation Change Rate (%) | -8 | -15 |
| | | Tensile Strength Change Rate (%) | -9 | -20 |
| | High Temperature High Humidity Endurance | Hardness Change Rate (%) | 5 | -6 |
| | | Elongation Change Rate (%) | 4 | -3 |
| | | Tensile Strength Change Rate (%) | 8 | -20 |
| | Refrigerant Resistance | Hardness Change Rate (%) | 3 | -15 |
| | | Elongation Change Rate (%) | -6 | -18 |
| | | Tensile Strength Change Rate (%) | 0 | -26 |

As a result of comparing Example 6 and Comparative Example 4 in Table 3, it is seen that Example 6 was able to provide a curable resin composition having a screen printability with "◦ (Good)" while having cured product characteristics such as heat resistance, acid resistance, high temperature high humidity endurance, and refrigerant resistance. On the other hand, in Comparative Example 4, the screen printability was "o (Good)" owing to the low viscosity but the change rates in the durability tests were great.

Industrial Applicability

The present invention was made in view of the aforementioned circumstances. A curable resin composition of the present invention achieves not only both a low viscosity and a low compression set but also cured product properties such as heat resistance, acid resistance, high temperature high humidity endurance, and refrigerant resistance, and therefore can be used in various usages such as sealants, adhesive agents, coating agents, casting agents, and potting agents and thus is industrially useful.

Reference Signs List

1: cell of polymer electrolyte fuel cell

2: separator
3a: air electrode (cathode)
3b: fuel electrode (anode)
4: polymer electrolyte membrane
5: electrolyte membrane electrode assembly (MEA)
6: frame
7: sealant
8a: oxidizing gas channel
8b: fuel gas channel
9: cooling water channel
10: cell stack
11: polymer electrolyte fuel cell

## Claims

**1.** A curable resin composition comprising Components (A) to (D) specified below:

Component (A): a vinyl polymer having one or more alkenyl groups per molecule;
Component (B): a compound having one or more hydrosilyl groups per molecule;
Component (C): a catalyst; and
Component (D): a silicone rubber powder surface-coated with a silicone resin.

**2.** The curable resin composition according to claim 1, wherein the Component (D) has a 50% average particle diameter of 0.5 to 10 μm.

**3.** The curable resin composition according to claim 1 or 2, wherein the Component (A) is polyisobutylene having two or more alkenyl groups per molecule.

**4.** The curable resin composition according to any one of claims 1 to 3, wherein the composition contains 10 to 90 parts by mass of the Component (D) per 100 parts by mass of the Component (A).

**5.** The curable resin composition according to any one of claims 1 to 4, wherein the Component (B) is polyorganohydrogensiloxane.

**6.** The curable resin composition according to any one of claims 1 to 5, wherein the Component (C) is selected from chloroplatinic acid, platinum-olefin complex, platinum-vinylsiloxane complex, RhCl $(PPh_3)_3$, $RhCl_3$, $RuCl_3$, $IrCl_3$, $FeCl_3$, $AlCl_3$, $PdCl_2{\cdot}2H_2O$, NiClz, and $TiCl_4$.

**7.** The curable resin composition according to any one of claims 1 to 6, wherein each powder particle of the Component (D) is spherical.

**8.** The curable resin composition according to any one of claims 1 to 7, further comprising a diluent as Component (E), wherein the Component (E) is a plasticizer as Component (E1) and/or a monomer having an alkenyl group as Component (E2).

**9.** A thermosetting sealant comprising the curable resin composition according to any one of claims 1 to 8.

**10.** A sealant for fuel cells comprising the curable resin composition according to any one of claims 1 to 8.

**11.** The sealant for fuel cells according to claim 10, which is used to seal at least one member in the group consisting of a separator, a frame, an electrolyte, a fuel electrode, an air electrode, and an electrolyte membrane electrode assembly, which are members constituting a fuel cell, and another one of the members constituting the fuel cell.

**12.** The sealant for fuel cells according to claim 11, which is used in the fuel cell to seal the members of at least one pair in the group consisting of the adjacent separators, the adjacent frame and electrolyte membrane, and the adjacent frame and electrolyte membrane electrode assembly.

**13.** A method for sealing at least two members in the group consisting of a separator, a frame, an electrolyte, a fuel electrode, an air electrode, and an electrolyte membrane electrode assembly, which are members constituting a fuel cell, the method comprising performing Steps 1 to 3 described below in this order:

Step 1: a step of applying the curable resin composition according to any one of claims 1 to 8 to a seal surface of one of the members;
Step 2: a step of bonding the seal surface of the member in Step 1 to a seal surface of the other member; and
Step 3: a step of curing the curable resin composition by heating the curable resin composition.

**14.** A method for sealing at least two members in the group consisting of a separator, a frame, an electrolyte, a fuel electrode, an air electrode, and an electrolyte membrane electrode assembly, which are members constituting a fuel cell, the method comprising performing Steps 1 to 3 described below in this order:

Step 1: a step of applying the curable resin composition according to any one of claims 1 to 8 to a seal surface of one of the members;
Step 2: a step of curing the curable resin composition by heating the curable resin composition; and
Step 3: a step of pressing and fixing the seal surface of the member in Step 2 to a seal surface of the other member.

**15.** The seal method according to claim 13 or 14, wherein the applying step in Step 1 is performed by screen printing.

FIG.1

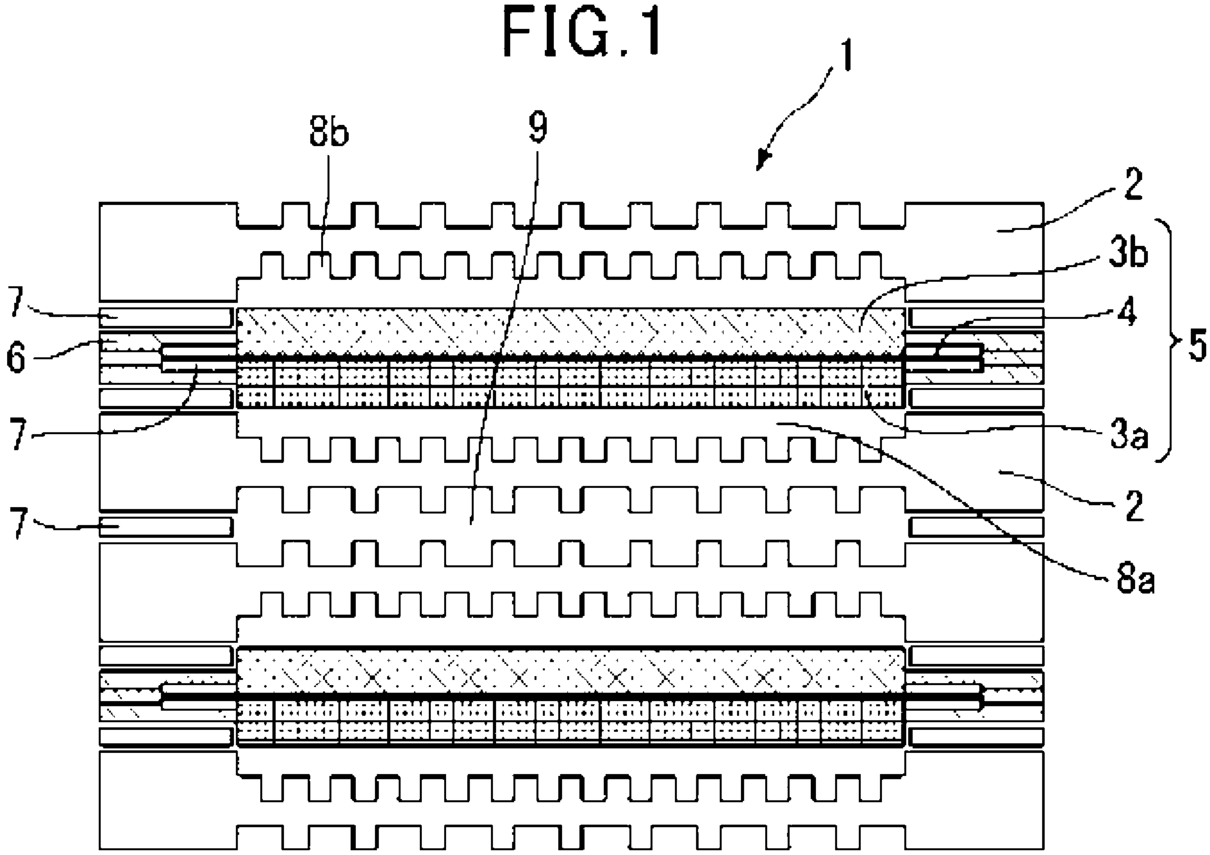


FIG.2

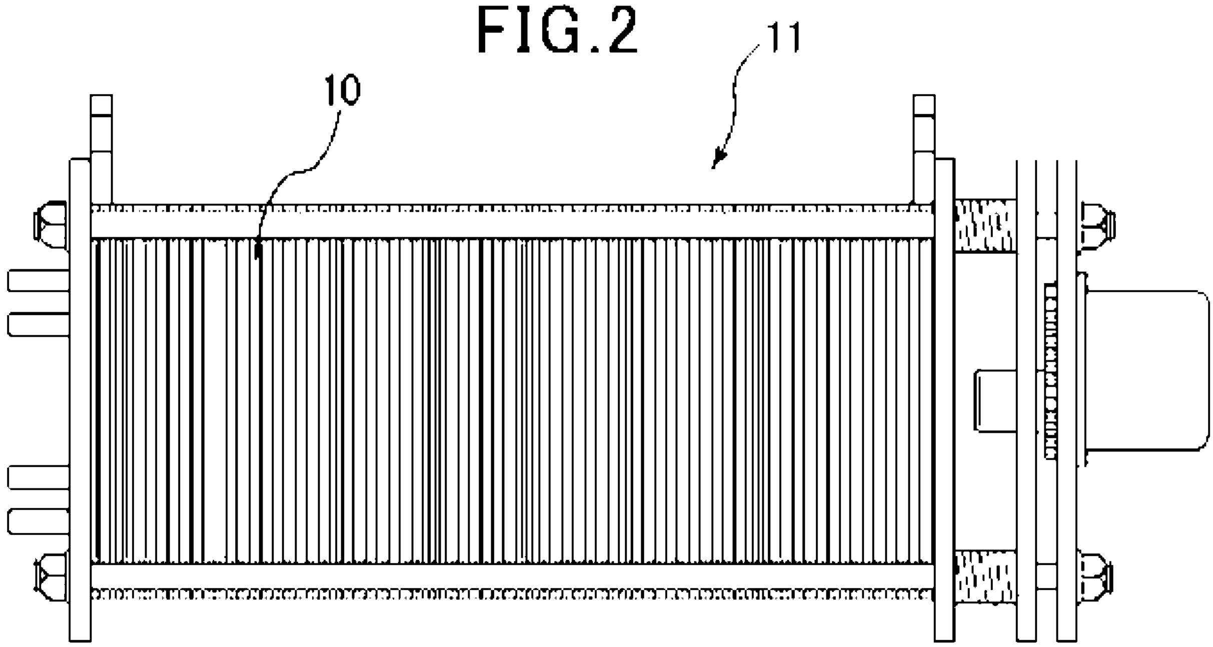

**INTERNATIONAL SEARCH REPORT**

International application No. **PCT/JP2022/038721**

**A. CLASSIFICATION OF SUBJECT MATTER**

***C08L 101/02***(2006.01)i; ***C08L 23/22***(2006.01)i; ***C08L 83/04***(2006.01)i; ***C08L 83/05***(2006.01)i; ***C09K 3/10***(2006.01)i; ***H01M 8/0284***(2016.01)i; ***H01M 8/10***(2016.01)i
FI: C08L101/02; C08L23/22; C08L83/04; C08L83/05; C09K3/10 J; H01M8/0284; H01M8/10 101

According to International Patent Classification (IPC) or to both national classification and IPC

**B. FIELDS SEARCHED**

Minimum documentation searched (classification system followed by classification symbols)

C08L101/02; C08L23/22; C08L83/04; C08L83/05; C09K3/10; H01M8/0284; H01M8/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2006-213899 A (KANEKA CORP.) 17 August 2006 (2006-08-17) claims, paragraphs [0004], [0010]-[0013], [0114], [0115], [0120], [0180], examples 1, 2 | 1-9<br>10-15 |
| Y | WO 2018/003855 A1 (THREEBOND CO., LTD.) 04 January 2018 (2018-01-04) claims | 10-15 |
| Y | WO 2017/154777 A1 (THREEBOND CO., LTD.) 14 September 2017 (2017-09-14) claims | 10-15 |
| Y | WO 2018/190417 A1 (THREEBOND CO., LTD.) 18 October 2018 (2018-10-18) claims | 10-15 |
| Y | WO 2018/012631 A1 (THREEBOND CO., LTD.) 18 January 2018 (2018-01-18) claims | 10-15 |
| A | WO 2005/095520 A1 (THREEBOND CO., LTD.) 13 October 2005 (2005-10-13) | 1-15 |

☐ Further documents are listed in the continuation of Box C.　☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 December 2022** | **20 December 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/038721**

| Patent document cited in search report | Publication date (day/month/year) | Patent family member(s) | Publication date (day/month/year) |
|---|---|---|---|
| JP 2006-213899 A | 17 August 2006 | (Family: none) | |
| WO 2018/003855 A1 | 04 January 2018 | US 2019/0300690 A1 claims<br>EP 3476900 A1<br>KR 10-2019-0022511 A<br>CN 109312165 A | |
| WO 2017/154777 A1 | 14 September 2017 | US 2020/0172770 A1 claims<br>EP 3428229 A1<br>KR 10-2018-0120159 A<br>CN 108699310 A | |
| WO 2018/190417 A1 | 18 October 2018 | US 2020/0321634 A1 claims<br>EP 3611227 A1<br>CN 110494500 A | |
| WO 2018/012631 A1 | 18 January 2018 | US 2019/0315957 A1 claims<br>EP 3486288 A1<br>CN 109476925 A<br>KR 10-2019-0031477 A | |
| WO 2005/095520 A1 | 13 October 2005 | US 2008/0279617 A1<br>EP 1731572 A1<br>CN 1942526 A<br>KR 10-2007-0004802 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004111146 A
- JP 2009117314 A
- WO 2005095520 A
- JP 2006213899 A